# EUROPEAN PATENT APPLICATION

(11) **EP 1 612 705 A2**
(43) Date of publication of application: **04.01.2006**
(21) Application number: 05253746.1
(22) Date of filing: 16.06.2005
(51) Int. Cl.: G06F 17/30

(54) **Music content storage apparatus, system and method**

(30) Priority: 30.06.2004 JP 2004193889
(71) Applicant: SONY CORPORATION, Tokyo (JP)
(72) Inventor: Yamauchi, Yasuharu c/o Sony Corporation, Tokyo (JP); Miyazawa, Masaaki c/o Sony Corporation, Tokyo (JP)
(74) Representative: Nicholls, Michael John

(57) **Abstract**

A content storage apparatus and method, and content storage system can offer improved content data management. When a personal computer 4 is connected to a portable reproduction apparatus 3 and executes a write process of writing music data on the hard disk drive 35 of the portable reproduction apparatus 3 or a delete process of deleting music data from the hard disk drive 35 of the portable reproduction apparatus 3, it then writes data on the outcome of the write process indicating the data number of the music data written by the write process or data on the outcome of the delete process indicating the data number of the music data deleted by the delete process, whichever appropriate, on the hard disk drive 35 of the portable reproduction apparatus 3.

## Description

### CROSS REFERENCE TO RELATED APPLICATIONS

The present invention contains subject matter related to Japanese Patent Application JP2004-193889 filed in the Japanese Patent Office on June 30, 2004, the entire contents of which being incorporated herein by reference.

### BACKGROUND OF THE INVENTION

### FIELD OF THE INVENTION

This invention relates to a content storage apparatus and method, and content storage system, and more particularly, is suitably applied to a portable reproduction apparatus for storing music data transferred from an external apparatus such as a personal computer in a local hard disk drive and reproducing desired music data from the hard disk drive in response to user operation.

### DESCRIPTION OF THE RELATED ART

Portable reproduction apparatus for storing music data transferred from a personal computer in a local hard disk drive and reproducing desired music data from the hard disk drive in response to user operation have become increasingly popular in recent years.

Such portable reproduction apparatus are generally designed to display the titles and other pieces of information of a plurality of music data stored in the local hard disk drive on a display section, by genre or numbers of times of reproduction and to reproduce selected music data in response to user operation (see, U. S. Patent Application Publication No. 2004/0055446A1).

### SUMMARY OF THE INVENTION

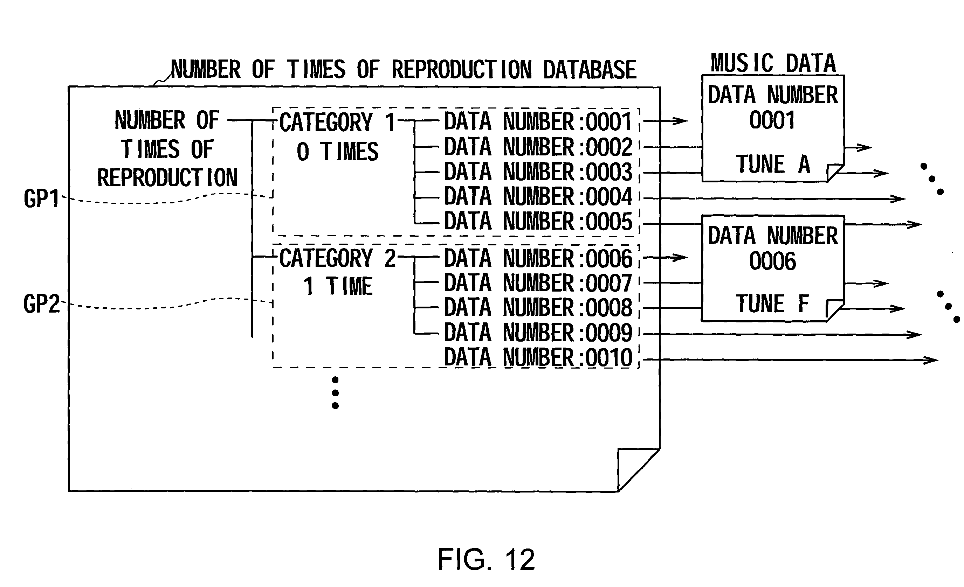

A technique to display the titles of the music data by number of times of reproduction will be now described. A portable reproduction apparatus has a database storing the number of times by which each music data has been reproduced as shown in FIG. 12. Note that such a "number of times of reproduction database" is prepared by using a predetermined format and FIG. 12 is a simplified illustration of the database.

The data numbers assigned to the respective music data stored in the hard disk drive of the portable reproduction apparatus are classified into categories of numbers of times of reproduction and registered in the number of times of reproduction database. With this arrangement, the portable reproduction apparatus can recognize the number of times of reproduction of each of the music data stored in the local hard disk drive on the basis of the number of times of reproduction database and hence it can classify the titles of the music data into categories of numbers of times and display the classified tittles.

When the portable reproduction apparatus is connected to a personal computer typically by way of a cable for the purpose of transferring music data from the personal computer to the portable reproduction apparatus, the personal computer operates as master for actively executing the process of transferring the music data, whereas the portable reproduction apparatus operates as slave relative to the personal computer.

More specifically, the personal computer executes a process of accessing the hard disk drive of the portable reproduction apparatus that is operating as slave by way of a cable and writing the music data to the hard disk drive in the process of transferring music data to the portable reproduction apparatus.

At this time, the personal computer has to register the data number of each of the newly written music data to the number of times of reproduction database so as to classify it into the number of times of reproduction [0] category GP1. However, since the number of times of reproduction database is a database that is not owned by the personal computer but built in the portable reproduction apparatus, the personal computer does not recognize the rule of registration that "the data number of a newly written music data is to be registered to the number of times of reproduction database so as to classify it into the number of times of reproduction [0] category GP1". Therefore, there arises a problem that the personal computer may not correctly register the data number of the newly written music data to the number of times of reproduction database and consequently the portable reproduction apparatus may not correctly manage the number of times of reproduction of the music data.

On the other hand, the portable reproduction apparatus stores in advance a program for executing a process for the number of times of reproduction database among other programs and hence it recognizes the rule of registration that "the data number of a newly written music data is to be registered to the number of times of reproduction database so as to classify it into the number of times of reproduction [0] category GP1". However, as long as the personal computer is transferring music data to the portable reproduction apparatus, the latter is operating as slave relative to the former because they are connected to each other by way of a cable. Therefore, as long as the personal computer is transferring music data to the portable reproduction apparatus, the latter may not actively execute the process of registering the data number of the music data to the number of times of reproduction database.

It may be conceivable to have the portable reproduction apparatus register the data number of each of the newly written music data to the number of times of reproduction database when the portable reproduction apparatus is separated from the personal computer and becomes to be able to actively execute processes. However, as long as the personal computer is transferring music data to the portable reproduction apparatus, the latter is operating as slave relative to the former and hence may not grasp the music data newly written to it by the former. Therefore, when the portable reproduction apparatus is separated from the personal computer, it may not identify the newly written music data among the music data stored in its own hard disk drive. Thus, there arises a problem that the portable reproduction apparatus may not correctly register the data number of the newly written music data to the number of times of reproduction database and consequently it may not correctly manage the number of times of reproduction of the music data.

In view of the foregoing, the present invention intends to provide a content storage apparatus and method, and content storage system to realize improved content data management.

According to one embodiment of the present invention, there is provided a content transfer system including a content transfer apparatus for transferring content data to a content storage apparatus and the content storage apparatus for storing the content data, the content storage apparatus having a management database for storing content identification information for identifying the content data and corresponding data numbers. The content transfer apparatus has a storage unit for storing desired content data; a transfer unit for transferring the desired content data to the content storage apparatus; and a control unit for detecting an unused data number in the content storage apparatus and transferring the desired content data to the content storage apparatus together with the unused data number.

Further, according to one embodiment of the present invention, there is provided a content transfer method in a content transfer system including a content transfer apparatus for transferring content data to a content storage apparatus and the content storage apparatus for storing the content data, the content storage apparatus having a management database for storing content identification information for identifying the content data and corresponding data numbers. This content transfer method includes: a detection step of detecting an unused data number in the content storage apparatus; and a transfer step of transferring desired content data to the content storage apparatus together with the unused data number.

Still further, according to one embodiment of the present invention, there is provided a content transfer apparatus for transferring content data to a content storage apparatus for storing the content data, the content storage apparatus having a management database for storing content identification information for identifying the content data and corresponding data numbers. The content transfer apparatus includes: a storage unit for storing desired content data; a transfer unit for transferring the desired content data to the content storage apparatus; and a control unit for detecting an unused data number in the content storage apparatus and transferring the desired content data to the content storage apparatus together with the unused data number.

According to the present invention, the content transfer apparatus of the content transfer system is provided with the control unit for detecting an unused data number in the content storage apparatus and transferring the desired content data to the content storage apparatus together with the unused data number, resulting in realizing improved content data management.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
FIG. 1 is a schematic illustration of a music data transfer system of the first and second embodiment;
FIG. 2 is a schematic block diagram of a personal computer;
FIG. 3 is a schematic block diagram of a portable reproduction apparatus;
FIG. 4 is a schematic illustration explaining a database;
FIG. 5 is a flow chart of a writing process (1);
FIG. 6 is a schematic illustration (1) of data stored in the hard disk drive of a portable reproduction apparatus;
FIG. 7 is a flow chart of a deleting process (1);
FIG. 8 is a schematic illustration (2) of data stored in the hard disk drive of a portable reproduction apparatus;
FIG. 9 is a flow chart of a writing process (2);
FIG. 10 is a schematic illustration (3) of data stored in the hard disk drive of a portable reproduction apparatus;
FIG. 11 is a flow chart of a deleting process (2); and
FIG. 12 is a schematic illustration (4) of data stored in the hard disk drive of a portable reproduction apparatus.

### DETAILED DESCRIPTION OF THE PREFERRED EMBODIMENTS

Now, preferred embodiments of the present invention will be described with reference to the accompanying drawings.

### (1) First Embodiment

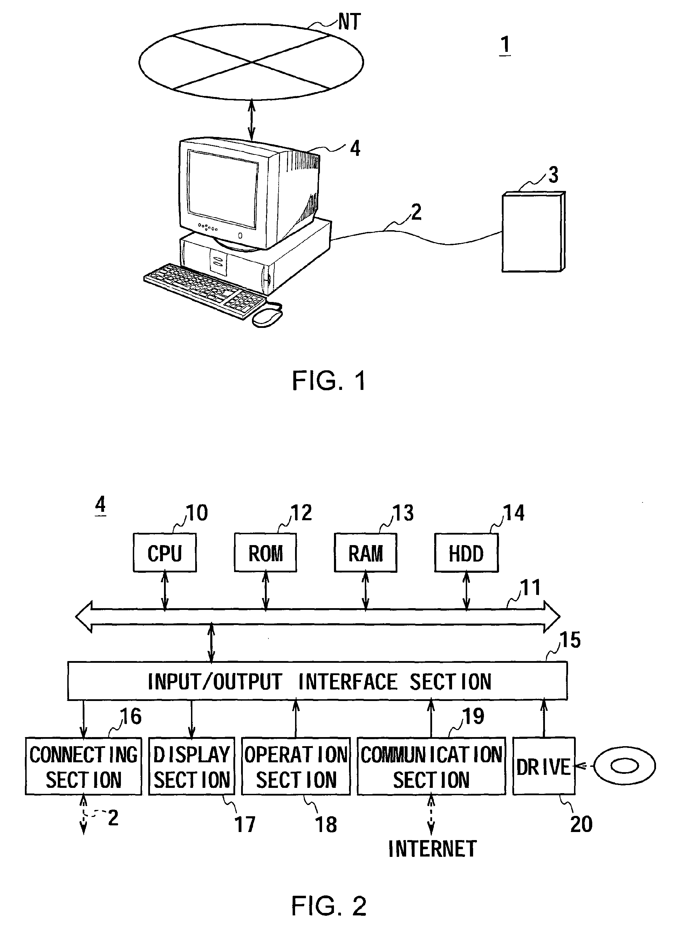

Referring to FIG. 1, reference numeral 1 generally denotes a music data transfer system that has a personal computer 4 for transferring the music data downloaded typically by way of Internet NT to a portable reproduction apparatus 3 by way of a cable 2 and the portable reproduction apparatus 3 adapted to store the music data transferred to it from the personal computer 4 by way of the cable 2 in a local hard disk drive.

Now, referring to FIG. 2, the configuration of the personal computer 4 will be described below. The central processing unit (CPU) 10 of the personal computer 4 that comprehensively controls the personal computer 4 is connected to a read only memory (ROM) 12 a random access memory (RAM) 13, a hard disk drive 14 and an input/output interface section 15 by way of a bus 11. The input/output interface section 15 is by turn connected to a connecting section 16 for connecting the personal computer 4 to the portable reproduction apparatus 3 by way of the cable (e.g., a USB cable) 2, a display section 17 for displaying various pieces of information, an operation section 18 that typically includes a keyboard, a communication section 19 for communicating with an external server by way of Internet NT and a drive section 20 for reading data recorded on a compact disc (CD) or the like.

The CPU 10 of the personal computer 4 reads various programs stored in the ROM 12 and the hard disk drive 14 and unfolds them in the RAM 13 so as to execute various processes including those for downloading music data and transferring them.

More specifically, as the user operates the operation section 18 for downloading music data, the CPU 10 of the personal computer 4 accesses an external server by way of Internet NT by controlling the communication section 19 and acquires the music data corresponding to the downloading operation of the user from the server. Then, the CPU 10 of the personal computer 4 stores the music data it has acquired in the hard disk drive 14.

Thereafter, if the user operates the operation section 18 for transferring the music data to the portable reproduction apparatus 3, the CPU 10 of the personal computer 4 reads out the music data corresponding to the transferring operation of the user from the hard disk drive 14 and writes the music data it has read out into the hard disk drive of the portable reproduction apparatus 3 that is connected to it and operating as slave by way of the cable 2.

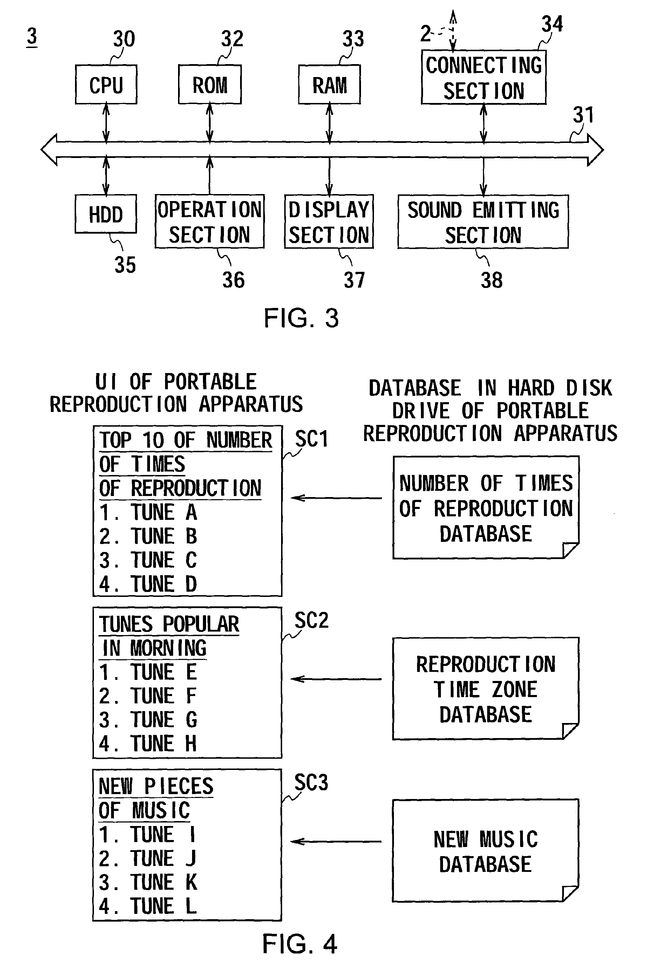

Now, the configuration of the portable reproduction apparatus 3 will be described by referring to FIG. 3. The CPU 30 of the portable reproduction apparatus 3 that comprehensively controls the portable reproduction apparatus 3 is connected to a ROM 32, a RAM 33, a connecting section 34 for connecting the portable reproduction apparatus 3 to the personal computer 4 by way of the cable 2, a hard disk drive 35 storing music data and various databases, which will be described in greater detail hereinafter, an operation section 36 that typically has operation keys and operation buttons, a display section 37 that typically has a liquid crystal display and a sound emitting section 38 that corresponds to an ear phone or a loudspeaker.

The CPU 30 of the portable reproduction apparatus 3 reads out various programs stored in the ROM 32 and the hard disk drive 35 and unfolds them in the RAM 33 so as to execute various processes including those for reproducing music data.

Thereafter, if the user operates the operation section 36 for reproducing music data, the CPU 30 of the portable reproduction apparatus 3 reads out the music data from the hard disk drive 35 and executes a predetermined reproduction process on the read out music data so as to output music from the sound emitting section 38.

The hard disk drive 35 of the portable reproduction apparatus 3 includes a music management database. The music management database stores the titles of the music data that are currently stored in the hard disk drive 35 of the portable reproduction apparatus 3 and the corresponding data numbers assigned to the respective music data.

Additionally, the hard disk drive 35 of the portable reproduction apparatus 3 also includes a number of times of reproduction database, a reproduction time zone database and a new music database.

The number of times of reproduction database stores the number of times of reproduction of each music data stored in the hard disk drive 35 of the portable reproduction apparatus 3. The reproduction time zone database stores the time zones when each music data is reproduced. The new music database is used to grasp the music data that are newly written to the hard disk drive 35 of the portable reproduction apparatus 3 by the personal computer 4. These databases are prepared by using a predetermined format.

The CPU 30 of the portable reproduction apparatus 3 displays various images on the display section 37 on the basis of the data stored in the databases. More specifically, the CPU 30 of the portable reproduction apparatus 3 recognizes the number of times of reproduction of each music data stored in the hard disk drive 35 based on the number of times of reproduction database and displays an image SC1 showing the titles of the music data that are reproduced frequently on the display section 37 according to the outcome of the recognition. Additionally, the CPU 30 of the portable reproduction apparatus 3 recognizes the reproduction time zones of each music data stored in the hard disk drive 35 based on the reproduction time zone database and displays an image SC2 showing the titles of music data that are reproduced frequently in a predetermined time zone ("morning" in FIG. 4) on the display section 37 according to the outcome of the recognition. Furthermore, the CPU 30 of the portable reproduction apparatus 3 recognizes the titles of the music data that are newly written by the personal computer 4 in the last 24 hours and displays an image SC3 showing the outcome of the recognition on the display section 37.

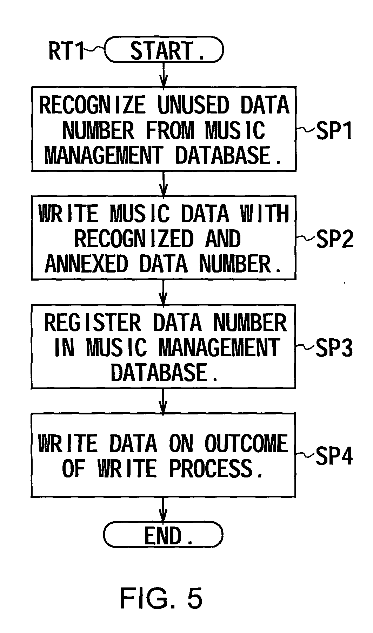

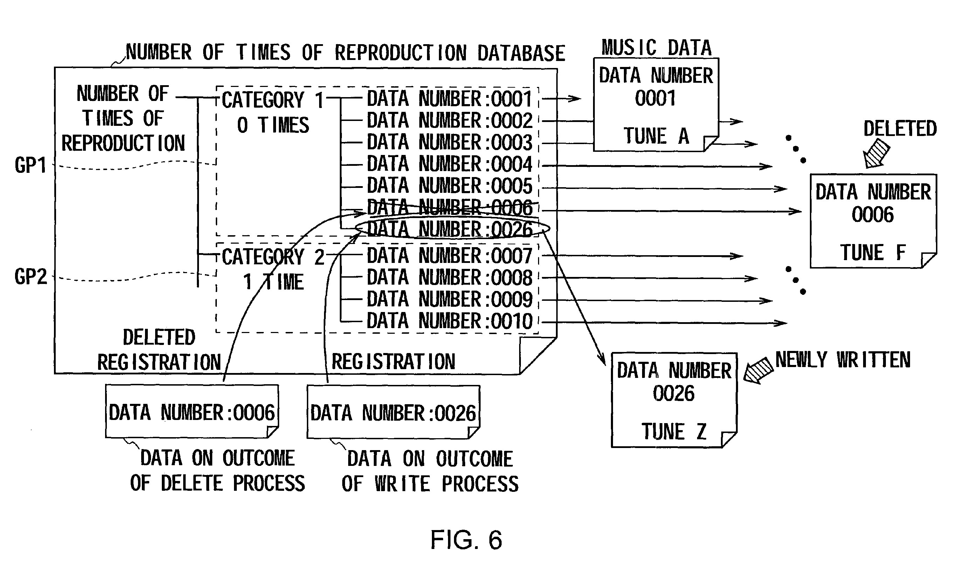

Now, the write process sequence RT1 to be followed when writing a new music data to the hard disk drive 35 of the portable reproduction apparatus 3 will be described below in detail by referring to FIGS. 5 and 6.

When the user operates the operation section 18 of the personal computer 4 to transfer music data "tune Z" to the portable reproduction apparatus 3, the CPU 10 of the personal computer 4 proceeds to Step SP1 in response to the operation and recognizes unused data number "0026" that is not assigned to any of the music data currently stored in the hard disk drive 35 of the portable reproduction apparatus 3, referring to the music management database in the hard disk drive 35 of the portable reproduction apparatus 3 by way of the cable 2.

Then, the CPU 10 of the personal computer 4 proceeds to Step SP2, where it annexes the recognized data number "0026" to the music data "tune Z" to be transferred to the portable reproduction apparatus 3 and subsequently writes the music data "tune Z", to which the data number "0026" has been annexed, to the hard disk drive 35 of the portable reproduction apparatus 3 by way of the cable 2 (FIG. 6). In this way, the music data "tune Z", to which the data number "0026" that is unique in the portable reproduction apparatus 3 is annexed is transferred from the personal computer 4 to the portable reproduction apparatus 3.

Thereafter, the CPU 10 of the personal computer 4 proceeds to Step SP3, where it registers the data number "0026" of the newly written music data to the music management database in the hard disk drive 35 of the portable reproduction apparatus 3 by way of the cable 2.

Then, the CPU 10 of the personal computer 4 proceeds to Step SP4, where it writes data on the result of the write process that indicates the data number "0026" of the newly written music data to the hard disk drive 35 of the portable reproduction apparatus 3 by way of the cable 2.

As a result, when the portable reproduction apparatus 3 is separated from the personal computer 4 and becomes to be able to actively execute processes, it can recognize the data number "0026" of the music data that is newly written to the hard disk drive 35 according to the data on the outcome of the write process stored in the hard disk drive 35. Thus, the portable reproduction apparatus 3 can register the data number "0026" of the newly written music data so as to make it belong to the number of times of reproduction [0] category GP1.

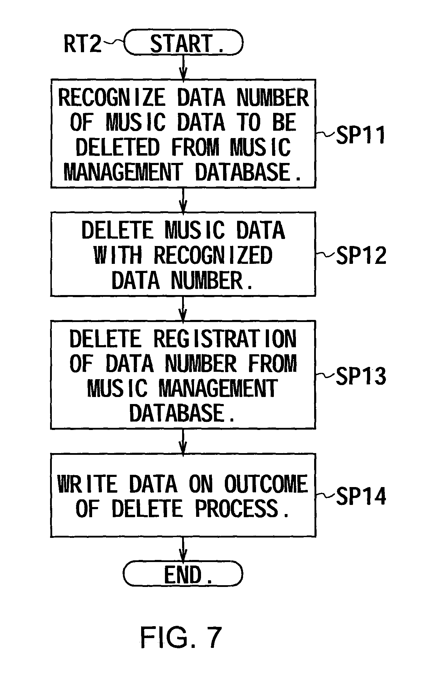

Now, the delete process sequence RT2 to be followed when deleting music data from the hard disk drive 35 of the portable reproduction apparatus 3 will be described below in detail by referring to FIGS. 7 and 6.

When the user operates the operation section 18 of the personal computer 4 to delete music data "tune F" stored in the hard disk drive 35 of the portable reproduction apparatus 3, the CPU 10 of the personal computer 4 proceeds to Step SP11 in response to the operation and recognizes the data number "0006" of the music data that corresponds to the input title "tune F", referring to the music management database in the hard disk drive 35 of the portable reproduction apparatus 3 by way of the cable 2.

Then, the CPU 10 of the personal computer 4 proceeds to Step SP12, where it accesses the hard disk drive 35 of the portable reproduction apparatus 3 by way of the cable 2, identifies the music data of the data number "0006" that is recognized in Step SP11 among the plurality of music data stored in the hard disk drive 35 and deletes the identified music data.

Thereafter, the CPU 10 of the personal computer 4 proceeds to Step SP13, where it deletes the registration of the data number "0006" of the deleted music data from the music management database in the hard disk drive 35 of the portable reproduction apparatus 3.

Then, the CPU 10 of the personal computer 4 proceeds to Step S14, where it writes data on the result of the delete process that indicates the data number "0006" of the deleted music data to the hard disk drive 35 of the portable reproduction apparatus 3 by way of the cable 2.

As a result, when the portable reproduction apparatus 3 is separated from the personal computer 4 and becomes to be able to actively execute processes, it can recognize the data number "0006" of the music data that is deleted from the hard disk drive 35 according to the data on the outcome of the delete process stored in the hard disk drive 35. Thus, the portable reproduction apparatus 3 can delete the registration of the data number "0006" of the deleted music data from the number of times of reproduction database.

With the above described arrangement, when the user operates the operation section 18 of the personal computer 4 to transfer music data to the portable reproduction apparatus 3, the CPU 10 of the personal computer 4 annexes a data number that is unique in the portable reproduction apparatus 3 to the music data to be transferred and subsequently writes the music data, to which the data number has been annexed, to the hard disk drive 35 of the portable reproduction apparatus 3 by way of the cable 2. At this time, the CPU 10 of the personal computer 4 generates data on the result of the write process that indicates the data number of the written music data and writes the generated data on the result of the write process to the hard disk drive 35 of the portable reproduction apparatus 3 by way of the cable 2.

As a result, when the portable reproduction apparatus 3 is separated from the personal computer 4 and becomes to be able to actively execute processes, it can recognize the data number of the music data that is newly written to the hard disk drive 35 according to the data on the outcome of the write process stored in the hard disk drive 35. Thus, the portable reproduction apparatus 3 can register the data number of the newly written music data in the number of times of reproduction database so as to make it belong to the number of times of reproduction [0] category.

When, on the other hand, the user operates the operation section 18 of the personal computer 4 to delete music data stored in the hard disk drive 35 of the portable reproduction apparatus 3, the personal computer 4 accesses the hard disk drive 35 of the portable reproduction apparatus 3 by way of the cable 2 and deletes the music data that corresponds to the delete operation from the hard disk drive 35. Then, the CPU 10 of the personal computer 4 generates data on the result of the delete process that indicates the data number of the deleted music data and writes the generated data on the result of the delete process to the hard disk drive 35 of the portable reproduction apparatus 3 by way of the cable 2.

As a result, when the portable reproduction apparatus 3 is separated from the personal computer 4 and becomes to be able to actively execute processes, it can recognize the data number of the music data that is deleted from the hard disk drive 35 according to the data on the outcome of the delete process stored in the hard disk drive 35. Thus, the portable reproduction apparatus 3 can delete the registration of the data number of the deleted music data from the number of times of reproduction database.

Thus, with the above described arrangement, after executing a write process of writing music data to or a delete process of deleting music data from the hard disk drive 35 of the portable reproduction apparatus 3 while the personal computer 4 is connected to the portable reproduction apparatus 3, the personal computer 4 writes the data on the result of the write process that indicates the data number of the music data written by the write process or the data on the result of the delete process that indicates the data number of the music data deleted by the delete process, whichever appropriate, to the hard disk drive 35 of the portable reproduction apparatus 3. Therefore, when the portable reproduction apparatus 3 is separated from the personal computer 4 and becomes to be able to actively execute processes, it can recognize the data number of the music data written by the personal computer 4 or the data number of the music data deleted by the personal computer 4 on the basis of the data on the result of the write process or the data on the result of the delete process, whichever appropriate, stored in the hard disk drive 35.

As a result, the portable reproduction apparatus 3 can, for example, register the data number of the newly written music data in the number of times of reproduction database so as to make it belong to the number of times of reproduction [0] category and hence, according to the invention, it is possible to realize a portable reproduction apparatus 3 that can correctly manage music data.

While the write process sequence RT1 and the delete process sequence RT2 of the first embodiment are described by way of an example of registering the data number of music data in and deleting the registration of the data number of music data from the number of times of reproduction database, process sequences similar to RT1, RT2 can be applied to the process of registering the data number of music data to and the process of deleting the data number of music data from the reproduction time zone database and the new music database.

### (2) Second Embodiment

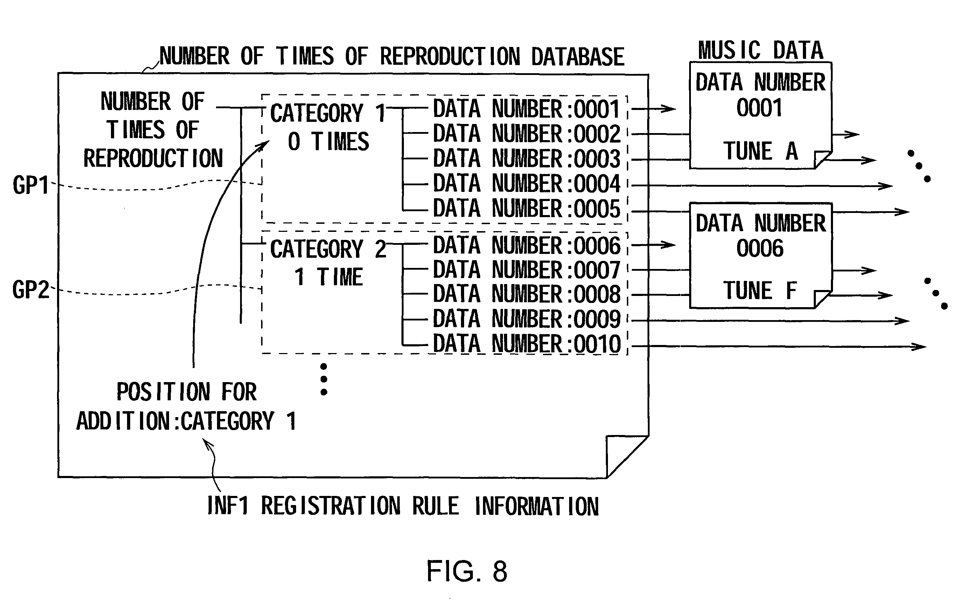

The configuration of the second embodiment of the present invention differs form that of the above described first embodiment in that registration rule information is indicated to the number of times of reproduction database in the hard disk drive 35 of the portable reproduction apparatus 3 as shown in FIG. 8. Now, the second embodiment will be described mainly from the viewpoint of the difference.

In the second embodiment, information indicating the number of times of reproduction [0] category GP1 ("class 1") is described in the number of times of reproduction database as registration rule information INF1. The registration rule INF1 refers to that "the data number of the music data newly written to the hard disk drive 35 of the portable reproduction apparatus 3 is registered in the number of times of reproduction database so as to make it belong to the number of times of reproduction [0] category GP1".

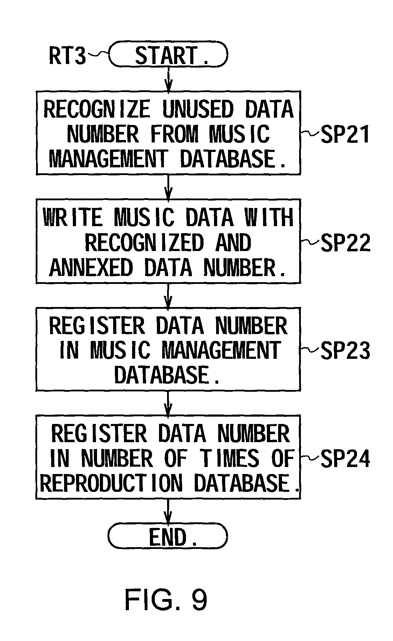

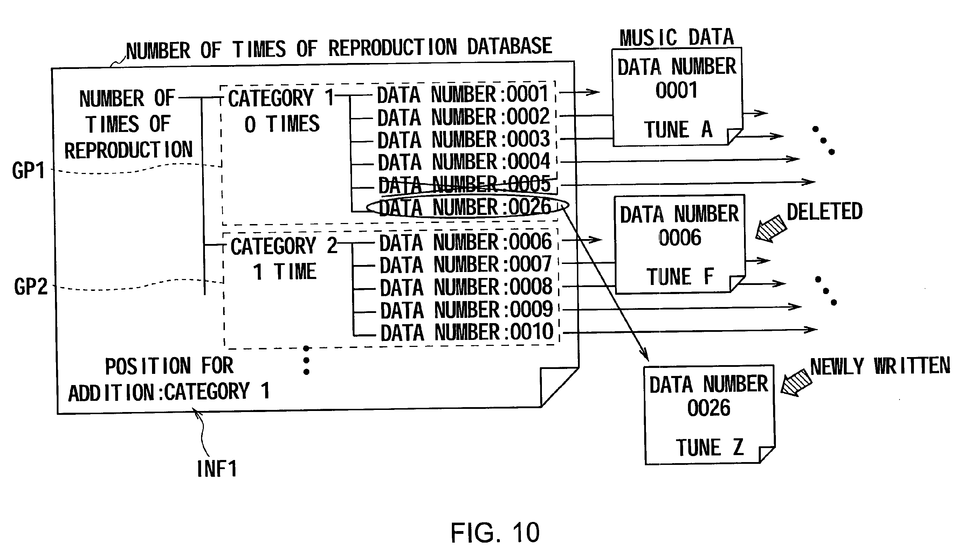

Now, the write process sequence RT3 to be followed by the second embodiment when writing new music data will be described below in detail by referring to FIGS. 9 and 10.

When the user operates the operation section 18 of the personal computer 4 to transfer music data "tune Z" to the portable reproduction apparatus 3, the CPU 10 of the personal computer 4 proceeds to Step SP21 in response to the operation and recognizes unused data number "0026" that is not assigned to any of the music data currently stored in the hard disk drive 35 of the portable reproduction apparatus 3, referring to the music management database in the hard disk drive 35 of the portable reproduction apparatus 3 by way of the cable 2.

Then, the CPU 10 of the personal computer 4 proceeds to Step SP22, where it annexes the recognized data number "0026" to the music data "tune Z" to be transferred to the portable reproduction apparatus 3 and subsequently writes the music data "tune Z", to which the data number "0026" has been annexed, to the hard disk drive 35 of the portable reproduction apparatus 3 by way of the cable 2 (FIG. 10). In this way, the music data "tune Z", to which the data number "0026" that is unique in the portable reproduction apparatus 3 is annexed, is transferred from the personal computer 4 to the portable reproduction apparatus 3.

Thereafter, the CPU 10 of the personal computer 4 proceeds to Step SP23, where it registers the data number "0026" of the newly written music data to the music management database in the hard disk drive 35 of the portable reproduction apparatus 3 by way of the cable 2.

Then, the CPU 10 of the personal computer 4 proceeds to Step SP24, where it recognizes the registration rule that "the data number of the music data newly written to the hard disk drive 35 of the portable reproduction apparatus 3 is registered in the number of times of reproduction database so as to make it belong to the number of times of reproduction [0] category GP1", referring to the registration rule information INF1 indicated in a predetermined part of the number of times of reproduction database in the hard disk drive 35 of the portable reproduction apparatus 3 by way of the cable 2. As a result, the CPU 10 of the personal computer 4 can register the data number "0026" of the music data according to the recognized registration rule in the number of times of reproduction database so as to make it belong to the number of times of reproduction [0] category GP1.

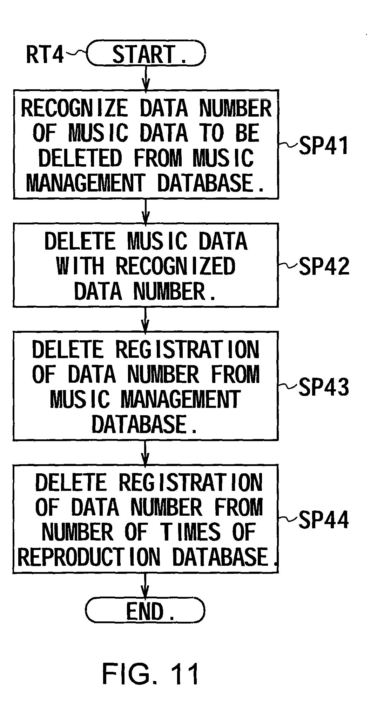

Now, the delete process sequence RT4 to be followed by the second embodiment when deleting a music data from the hard disk drive 35 will be described below in detail by referring to FIGS. 11 and 10.

When the user operates the operation section 18 of the personal computer 4 to delete music data "tune F" stored in the hard disk drive 35 of the portable reproduction apparatus 3, the CPU 10 of the personal computer 4 proceeds to Step SP41 in response to the operation and recognizes the data number "0006" of the music data that corresponds to the input title "tune F", referring to the music management database in the hard disk drive 35 of the portable reproduction apparatus 3 by way of the cable 2.

Then, the CPU 10 of the personal computer 4 proceeds to Step SP42, where it accesses the hard disk drive 35 of the portable reproduction apparatus 3 by way of the cable 2, identifies the music data of the data number "0006" that is recognized in Step SP41 among the plurality of music data stored in the hard disk drive 35 and deletes the identified music data.

Thereafter, the CPU 10 of the personal computer 4 proceeds to Step SP43, where it deletes the registration of the data number "0006" of the deleted music data from the music management database in the hard disk drive 35 of the portable reproduction apparatus 3.

Then, the CPU 10 of the personal computer 4 proceeds to Step SP44, where it deletes the registration of the data number "0006" of the deleted music data from the number of times of reproduction database in the hard disk drive 35 of the portable reproduction apparatus 3. Note that the CPU 10 of the personal computer 4 identifies the data number "0006" in the number of times of reproduction database, referring to all the data numbers indicated in the number of times of reproduction database and erases the identified data number "0006".

With the above described arrangement, the portable reproduction apparatus 3 refers to the registration rule information INF1 describing the registration rule to be observed when the data number of music data is registered in the number of times of reproduction database and stores it in the number of times of reproduction database.

Thus, when the personal computer 4 writes music data to the hard disk drive 35 of the portable reproduction apparatus 3 by way of the cable 2, it can recognize the registration rule to be observed when registering the data number of the written music data to the number of times of reproduction database, referring to the registration rule information INF1 described in a predetermined part of the number of times of reproduction database in the hard disk drive 35. As a result, the personal computer 4 can correctly register the data number of the written music data in the number of times of reproduction database in the portable reproduction apparatus 3.

With the above described arrangement, when the personal computer 4 writes music data to the hard disk drive 35 of the portable reproduction apparatus 3 by way of the cable 2, it can recognize the registration rule to be observed when registering the data number of the written music data to the number of times of reproduction database, referring to the registration rule information INF1 described in a predetermined part of the number of times of reproduction database in the hard disk drive 35.

As a result, the personal computer 4 can correctly register the data number of the written music data in the number of times of reproduction database in the portable reproduction apparatus 3 while it is connected to the portable reproduction apparatus 3 by way of the cable 2.

Unlike the first embodiment, not the portable reproduction apparatus 3 but the personal computer 4 of the second embodiment registers the data number of music data in the number of times of reproduction database. As a result, it is possible to reduce the processing load of the portable reproduction apparatus 3. Particularly, since the portable reproduction apparatus 3 is carried by the user for use, it is driven to operate by a battery or the like contained in it. Therefore, as the processing load of the portable reproduction apparatus 3 is reduced in this way, the power consumption of the portable reproduction apparatus 3 is also reduced to provide an advantage that the portable reproduction apparatus 3 can be driven to operate for a prolonged period of time

While the write process sequence RT3 and the delete process sequence RT4 of the second embodiment are described by way of an example of registering the data number of music data in and deleting the registration of the data number of music data from the number of times of reproduction database, process sequences similar to RT3, RT4 can be applied to the process of registering the data number of music data to and the process of deleting the data number of music data from the reproduction time zone database and the new music database. If such is the case, the registration rule information on registration of the data number of music data written to the hard disk drive 35 of the portable reproduction apparatus 3 is shown in advance to a predetermined part of the reproduction time zone database and the new music database. Then, these database can provide advantages similar to those described above by referring to the number of times of reproduction database.

### (3) Other Embodiments

While the above embodiments are described in terms of storing music data in the portable reproduction apparatus 3, the present invention is by no means limited thereto and can be applied to any arrangement involving the use of video data, computer programs or various content data.

While the above embodiments are described in terms of a content storage apparatus for storing content data (music data) to which a portable reproduction apparatus 3 is applicable, a portable reproduction apparatus 3 is also applicable to various information processing apparatus including Personal Digital Assistances (PDAs), portable telephone sets and the like.

While the above embodiments are described in terms of a personal computer 4 that executes processes (for writing content data and erasing content data) on content data, the present invention is not limited thereto and any of various information processing apparatus can be used so long as it is adapted to execute processes on content data for the portable reproduction apparatus 3 connected to it by way of a wire or wirelessly.

While the use of the CPU 30 of the portable reproduction apparatus 3 is described as a registration unit for registering content data identifying information shown in the data on the outcome (the data on the outcome of the write process and the data on the outcome of the delete process) that are written by the content processing apparatus for the content registration data (the number of times of reproduction database, the reproduction time zone database, new music database) where the identification information (data numbers) of content data is registered for the above embodiments for the purpose of executing the process sequences RT1 and RT2 according to the computer program installed in advance, the present invention is by no means limited thereto and any of various different arrangement may alternatively be used.

While the use of the hard disk drive 35 of the portable reproduction apparatus 3 is described above as a content storage unit for storing content data, as a processing result data storage unit for storing the data on the outcome of a process and as a registration data storage unit for storing content registration data for the above embodiments, the present invention is by no means limited thereto and some other storage medium such as a semiconductor memory or a disk-shaped storage medium may alternatively be used. Furthermore, the content storage unit, the processing result data storage unit and the registration data storage unit may be realized by separate respective storage mediums.

While the use of a personal computer 4 is described above as content writing apparatus for writing content data to the content storage apparatus for the above embodiments, the present invention is by no means limited thereto and any of various information processing apparatus can be used so long as it is adapted to be able to write content data to the portable reproduction apparatus 3 connected to it by way of a wire or wirelessly.

Finally, while the use of the hard disk drive 35 of the portable reproduction apparatus 3 is described above as a content registration data storage unit for storing content registration data (the number of times of reproduction database, the reproduction time zone database, the new music database) and also as a registration rule data storage unit for storing the registration rule (the registration rule information INF1) for the above embodiment, the present invention is by no means limited thereto and some other storage medium such as a semiconductor memory or a disk-shaped storage medium may alternatively be used. Furthermore, the content registration data storage unit and the registration rule data storage unit may be realized by separate respective storage mediums.

As described above in detail, according to the invention, it is possible to store the music data transferred from an external apparatus such as personal computer in a local hard disk drive and utilize them in a portable reproduction apparatus adapted to reproduce any of the music data stored in the hard disk drive in response to an user operation.

It should be understood by those skilled in the art that various modifications, combinations, sub-combinations and alterations may occur depending on design requirements and other factors insofar as they are within the scope of the appended claims or the equivalents thereof.

## Claims

1. A content transfer system including a content transfer apparatus for transferring content data to a content storage apparatus and the content storage apparatus for storing the content data, the content storage apparatus having a management database for storing content identification information for identifying the content data and corresponding data numbers, wherein
the content transfer apparatus has:
storage means for storing desired content data;
transfer means for transferring the desired content data to the content storage apparatus; and
control means for detecting an unused data number in the content storage apparatus and transferring the desired content data to the content storage apparatus together with the unused data number.

2. The content transfer system according to claim 1, wherein
the control means is operable to register content identification information for identifying the desired content data to be transferred to the content storage apparatus and the unused data number in the management database in association with each other.

3. The content transfer system according to claim 1 or 2, wherein
the control means is operable to write the desired content data on the content storage apparatus.

4. The content transfer system according to claim 1, 2 or 3, wherein
the control means is operable to delete unwanted content data from the content storage apparatus.

5. The content transfer system according to any one of claims 1 to 4, wherein
the control means is operable to write on the content storage apparatus data on an outcome of process including content identification information for identifying the desired content data to be transferred to the content storage apparatus.

6. The content transfer system according to claim 5, wherein
the management database registers the content identification information included in the data on the outcome of process.

7. The content transfer system according to claim 5 or 6, wherein
the content storage apparatus registers the content identification information included in the data on the outcome of process in the management database when data transfer to the content transfer apparatus is disconnected.

8. The content transfer system according to any one of the preceding claims, wherein
the control means is operable to register the content identification information with the unused data number into a corresponding category in the management database according to a prescribed rule.

9. The content transfer system according to claim 8, wherein
the control means is operable to register the content identification information with the unused data number into the corresponding category for unused content data in the management database.

10. A content transfer method in a content transfer system including a content transfer apparatus for transferring content data to a content storage apparatus and the content storage apparatus for storing the content data, the content storage apparatus having a management database for storing content identification information for identifying the content data and corresponding data numbers, the content transfer method comprising:
a detection step of detecting an unused data number in the content storage apparatus; and
a transfer step of transferring desired content data to the content storage apparatus together with the unused data number.

11. The content transfer method according to claim 10, further comprising
a write step of writing the desired content data on the content storage apparatus.

12. The method according to claim 10 or 11, further comprising
a deletion step of deleting unwanted content data from the content storage apparatus.

13. The content transfer method according to claim 10, 11 or 12, further comprising
a registration step of registering content identification information for identifying the desired content data to be transferred to the content storage apparatus in the management database in association with the unused data number.

14. The content transfer method according to any one of claims 10 to 13, further comprising
an outcome data write step of writing on the content storage apparatus data on an outcome of process including content identification information for identifying the desired content data to be transferred to the content storage apparatus.

15. The content transfer method according to claim 14, further comprising
an outcome registration step of registering the content identification information included in the data on the outcome of process in the management database.

16. The content transfer method according to claim 15, wherein
the outcome registration step registers the content identification information included in the data on the outcome of process in the management database when content transfer to the content transfer apparatus is disconnected.

17. The content transfer method according to claim 13, wherein
the registration step registers the content identification information with the unused data number into a corresponding category in the management database according to a prescribed rule.

18. The content transfer method according to claim 17, wherein
the registration step registers the content identification information with the unused data number into the corresponding category for unused content data in the management database.

19. A content transfer apparatus for transferring content data to a content storage apparatus for storing the content data, the content storage apparatus having a management database for storing content identification information for identifying the content data and corresponding data numbers, the content transfer apparatus comprising:
storage means for storing desired content data;
transfer means for transferring the desired content data to the content storage apparatus; and
control means for detecting an unused data number in the content storage apparatus and transferring the desired content data to the content storage apparatus together with the unused data number.
